# EUROPÄISCHE PATENTANMELDUNG

(11) **EP 3 940 912 A1**
(43) Veröffentlichungstag der Anmeldung: **19.01.2022**
(21) Anmeldenummer: 20186513.6
(22) Anmeldetag: 17.07.2020
(51) Int. Cl.: H02J 1/10, H02J 3/00, H02P 9/02

(54) **ELEKTRISCHES ENERGIEVERSORGUNGSSYSTEM**

(71) Anmelder: Siemens Aktiengesellschaft, 80333 München (DE)
(72) Erfinder: Giessler, Folke, 96170 Lisberg (DE); Reimann, Oliver, 91056 Erlangen (DE)

(57) **Zusammenfassung**

Die Erfindung betrifft ein elektrisches Energieversorgungssystem (1,10), insbesondere für ein Inselnetz, welches einen Gleichspannungsbus (2,20) aufweist, wobei ein erster Gleichrichter (3) und ein zweiter Gleichrichter (4) zur Speisung des Gleichspannungsbusses (2,20) vorgesehen sind, wobei der erste Gleichrichter (3) ein Diodengleichrichter ist und der zweite Gleichrichter (4) schaltbare Leistungshalbleiter (5) aufweist, wobei der erste Gleichrichter (3) und der zweite Gleichrichter (4) mittels eines Generators (7) speisbar sind. Die Gleichrichter (3,4) zur Speisung des Gleichspannungsbusses (2) können abhängig von einer Last (9,11) zu unterschiedlichen Zeitpunkten zugeschalten werden.

## Beschreibung

Die Erfindung betrifft ein elektrisches Energieversorgungssystem, welches insbesondere in einem Inselnetz eingesetzt ist bzw. wird. Ein Beispiel für ein Inselnetz ist ein Schiff, eine Bohrinsel, eine pro Plattform, etc.

Zur elektrischen Energieversorgung im Inselnetz ist beispielsweise zumindest ein Diesel (Dieselmotor) und/oder eine Gasturbine vorgesehen, mittels derer ein elektrischer Generator antreibbar ist. Der elektrische Generator ist beispielsweise ein Asynchrongenerator oder ein Synchrongenerator. Ein Synchrongenerator kann fremderregt oder eigenerregt sein. Eine permanent erregte Synchronmaschine ist eine eigene erregte Maschine. Die Synchronmaschine kann sowohl als Generator wie auch als Motor verwendet werden. Dies gilt auch für die Asynchronmaschine. In einem Inselnetz und kann die elektrische Energie über einen Gleichspannungsbus verteilt bzw. übertragen werden. Der Gleichspannungsbus kann mittels zumindest eines Gleichrichters gespeist werden. Der oder die Gleichrichter erhalten die elektrische Energie von dem einen bzw. den mehrere Generatoren, welche beispielsweise mittels eines Diesels oder einer Gasturbine antreibbar sind.

Das elektrische Energieversorgungsystem kann beispielsweise bezüglich der Herstellungskosten und/oder bezüglich des Gewichts und/oder bezüglich der Betriebssicherheit verbessert werden. In diesem Zusammenhang kann nach einem oder mehreren Gleichrichtern für Asynchronmaschinen / Synchronmaschinen gesucht werden. Dieser Gleichrichter sollte insbesondere bei unterschiedlichen Dieselmotordrehzahlen eine konstante Zwischenkreisspannung ermöglichen. Die unterschiedlichen Dieselmotordrehzahlen werden benötigt, um den Dieselmotor auch bei Teillast in einem Drehzahlbereich mit optimaler Verbrauchskurve zu fahren. Ein derartiges Problem kann insbesondere bei dieselelektrischen Schiffsantrieben mit Gleichspannungszwischenkreis auftreten.

Eine Aufgabe der Erfindung ist es ein verbessertes System zur elektrischen Energieversorgung aufzuzeigen wobei dies insbesondere ein Inselnetz, insbesondere ein elektrisches Energieversorgungssystem auf einem Schiff betrifft.

Eine Lösung der Aufgabe ergibt sich bei einem elektrischen Energieversorgungssystem nach Anspruch 1 bzw. bei einem Verfahren zum Betrieb eines elektrischen Energieversorgungssystems nach Anspruch 9. Ausgestaltungen der Erfindung ergeben sich beispielsweise gemäß der Ansprüche 2 bis 8 bzw. nach Anspruch 10.

Ein elektrisches Energieversorgungssystem, insbesondere für ein Inselnetz, wobei ein Schiff ein Inselnetz aufweist, weist einen Gleichspannungsbus aufweist, wobei ein erster Gleichrichter und ein zweiter Gleichrichter zur Speisung des Gleichspannungsbusses vorgesehen sind. Der erste Gleichrichter ist ein Diodengleichrichter und der zweite Gleichrichter ist ein schaltbarer Gleichrichter, weist also schaltbare Leistungshalbleiter auf. Der Diodengleichrichter weist Dioden-Leistungshalbleiter auf. Schaltbare Leistungshalbleiter sind beispielsweise IGBTs oder Thyristoren. Der erste Gleichrichter und der zweite Gleichrichter sind mittels eines Generators speisbar. Die unterschiedlichen Gleichrichter weisen unterschiedliche Vorteile und Nachteile auf. Der Diodengleichrichter ist beispielsweise preisgünstig in der Herstellung. Der schaltbare Gleichrichter erhöht die Flexibilität und die technischen Einsatzmöglichkeiten.

In einer Ausgestaltung des elektrischen Energieversorgungssystems ist der Generator mittels einer Gasturbine oder mittels eines Diesels antreibbar. Sowohl der Diesel wie auch die Gasturbine könne in verschiedenen Betriebszuständen gefahren werden. Diese Betriebszustände weisen eine unterschiedliche Effizienz auf. Durch den Einsatz von Gleichrichtern unterschiedlichen Typs kann das System auf die unterschiedlichen Betriebszustände bzw. Betriebspunkte von Diesel oder Gasturbine besser eingestellt werden.

In einer Ausgestaltung des elektrischen Energieversorgungssystems ist der Generator eine Asynchronmaschine oder eine Synchronmaschine, wobei der Generator eine offene Schaltung aufweist. Durch die Verwendung der offenen Schaltung (kein Standpunkt) ist es möglich an dem gleichen Generator zwei Gleichrichter anzuschließen, ohne diese parallel zu schalten. Vorteilhaft sind dies Gleichrichter unterschiedlichen Typs, also insbesondere ein schaltbarer Gleichrichter und eine Diodengleichrichter, der nicht schaltbar ist.

In einer Ausgestaltung des elektrischen Energieversorgungssystems ist der Gleichspannungsbus ein Gleichspannungsbus eines Schiffes, wobei über den Gleichspannungsbus ein Motor zum Antrieb eines Schiffes speisbar ist. Ein Schiff weist unterschiedliche Verbraucher auf. Ein Verbraucher ist der Motor bzw. sind die Motoren zum Antrieb einer oder mehrerer Schiffsschrauben. Weiterhin kann beispielsweise die Bordnetz Versorgung als Verbraucher angesehen werden, wobei das Bordnetz beispielsweise zur Versorgung der Kombüse der Steuerungselektronik der Klimaanlage, etc. eingesetzt ist. Bei Kreuzfahrtschiffen ist beispielsweise die als Hotellast bezeichnete Last im Vergleich zur Antriebslast bei Fähren viel größer. Durch die unterschiedlichen Gleichrichter kann auf die entsprechende erwartete Lastverteilung eines speziellen Schiffes reagiert werden.

In einer Ausgestaltung des elektrischen Energieversorgungssystems weist die elektrische Verbindung des Generators mit dem ersten Gleichrichter und/oder mit dem zweiten Gleichrichter einen Filter auf. Mit diesem Filter kann der Gleichspannungsbus stabilisiert werden bzw. kann die Qualität der Gleichspannung im Gleichspannungsbus verbessert werden.

In einer Ausgestaltung des elektrischen Energieversorgungssystems weist der erste Gleichrichter zumindest 1/3 der Leistung des zweiten Gleichrichters aufweist und der zweite Gleichrichter weist zumindest 1/3 der Leistung des ersten Gleichrichters auf. Dieser Bereich ist insbesondere bei Schiffen anzustreben, da bei diesen die Antriebsleistung einen wesentlichen Anteil an der Gesamtleistung hat.

In einer Ausgestaltung des elektrischen Energieversorgungssystems weist der zweite Gleichrichter eine IGBT-Drehstrombrücke auf. Gleichrichter mit IGBT-Drehstrombrücken weisen eine hohe Flexibilität auf.

In einer Ausgestaltung des elektrischen Energieversorgungssystems weist der Gleichspannungsbus eine Kapazität aufweist. Durch diese Kapazität kann die Qualität der Gleichspannung im Gleichspannungsbus verbessert werden.

Die Erfindung betrifft auch ein Verfahren. Nach einem Verfahren zum Betrieb eines elektrischen Energieversorgungssystems, welches einen Gleichspannungsbus aufweist, wobei ein erster Gleichrichter und ein zweiter Gleichrichter zur Speisung des Gleichspannungsbusses vorgesehen sind, wobei der erste Gleichrichter ein Diodengleichrichter ist und der zweite Gleichrichter schaltbare Leistungshalbleiter aufweist, werden die Gleichrichter zur Speisung des Gleichspannungsbusses abhängig von einer Last zu unterschiedlichen Zeitpunkten zugeschalten. Die Last ist beispielsweise eine Hotellast oder eine Antriebslast eines Schiffes. Durch die unterschiedlichen Typen der Gleichrichter ist es möglich die Qualität der Gleichspannung im Gleichspannungsbus ausreichend hoch zu halten und die Kosten zu reduzieren, welche für die Installation und den Betrieb der Gleichrichter notwendig ist.

In einer Ausgestaltung des Verfahrens wird ein elektrisches Energieversorgungssystem der bereits beschrieben oder im Folgenden beschriebenen Art verwendet.

Im Folgenden wird die Erfindung beispielhaft anhand von Figuren näher dargestellt und erläutert. Die in den Figuren gezeigten Merkmale können fachmännisch zu neuen Ausführungsformen kombiniert werden, ohne die Erfindung zu verlassen. Es zeigen:
- FIG 1: ein elektrisches Energieversorgungssystem mit einem Diodengleichrichter;
- FIG 2: ein elektrisches Energieversorgungssystem mit einem aktiven Gleichrichter;

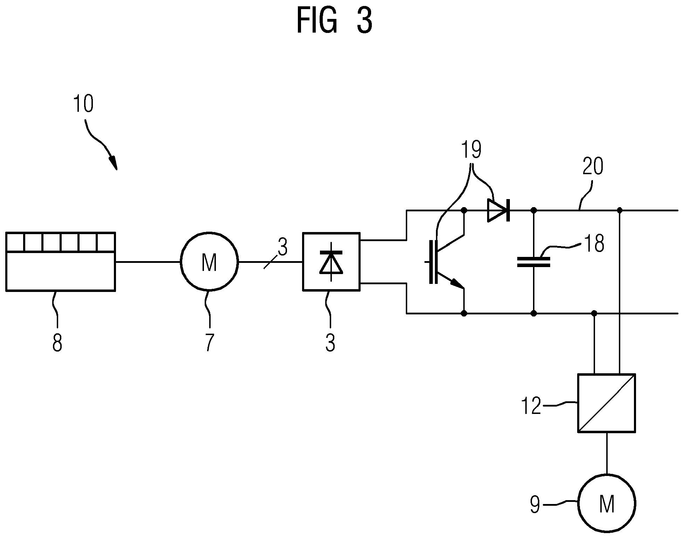

- FIG 3: ein elektrisches Energieversorgungssystem mit einem passiven Gleichrichter und einem Hochsetzsteller und
- FIG 4: ein elektrisches Energieversorgungssystem mit zwei Gleichrichtern.

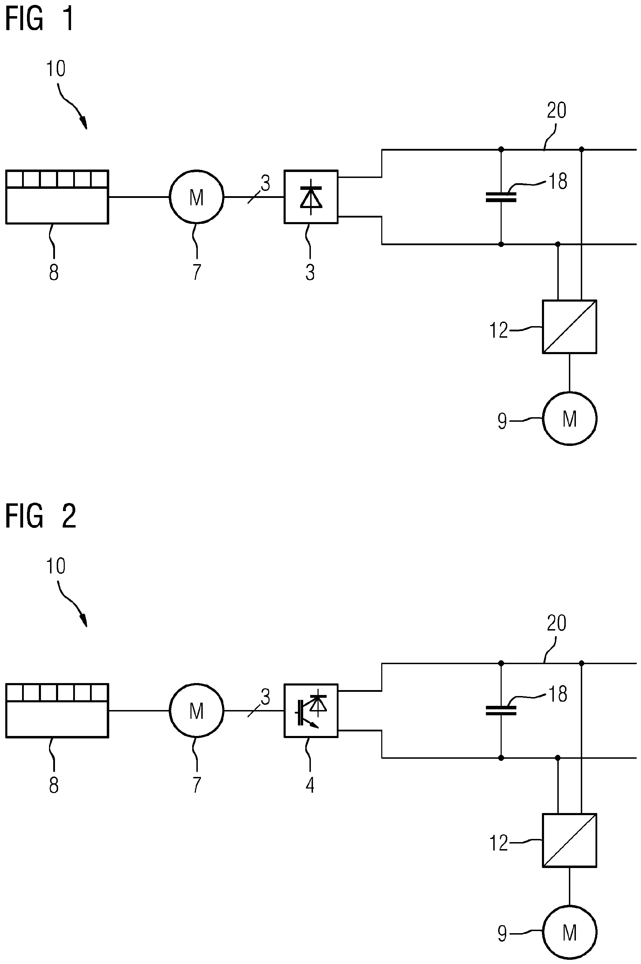

Die Darstellung nach Figur 1 zeigt ein elektrisches Energieversorgungssystem 10 mit einem Diodengleichrichter 3. Ein Generator 7 wird mit einem Diesel 8 (Diese-Maschine (DM)) angetrieben. Der Generator ist beispielsweise eine Synchronmaschine. Der Generator 7 speist dreiphasig den Diodengleichrichter 3. Der Diodengleichrichter 3, welche ein ungesteuerter Gleichrichter ist, speist den Gleichspannungsbus 20. Bei Volllast bzw. maximaler Dieseldrehzahl kann sich die Maschine im Feldschwächebereich befinden. Bei diesem Gleichspannungsbus 20, wie auch bei anderen Gleichspannungsbussen kann es sich gleichzeitig auch um einen Spannungszwischenkreis handeln. Der Gleichspannungsbus 20 weist eine Kapazität 18 auf. Mittels eines Wechselrichters 12 ist es möglich aus dem Gleichspannungsbus 20 elektrische Energie zu entnehmen und ein Motor 9 anzutreibenden. Der Motor 9 stellt eine Last dar.

Die Darstellung nach Figur 2 zeigt ähnlich wie in Figur 1 ein elektrisches Energieversorgungssystem 20, wobei im Gegensatz zu dem in Figur 1 dargestellten elektrischen Energieversorgungssystems 20 gemäß Figur 2 als Gleichrichter zur Speisung des Gleichspannungsbusses 20 anstelle des Diodengleichrichters ein aktiver Gleichrichter 4 eingesetzt ist. Der aktive Gleichrichter 4 kann ein klassisches IGBT Sixpack aufweisen (Drehrichter). Als Generator 7 kann beispielsweise eine Asynchron- / oder Synchronmaschine verwendet werden.

Die Darstellung nach Figur 2 zeigt, ähnlich wie in Figur 1, ein elektrisches Energieversorgungssystem 20, wobei im Vergleich zu dem in Figur 1 dargestellten elektrischen Energieversorgungssystems 20 gemäß Figur 2 zusätzlich zum passiven Gleichrichter 3 noch ein Hochsetzsteller 19 eingesetzt ist.

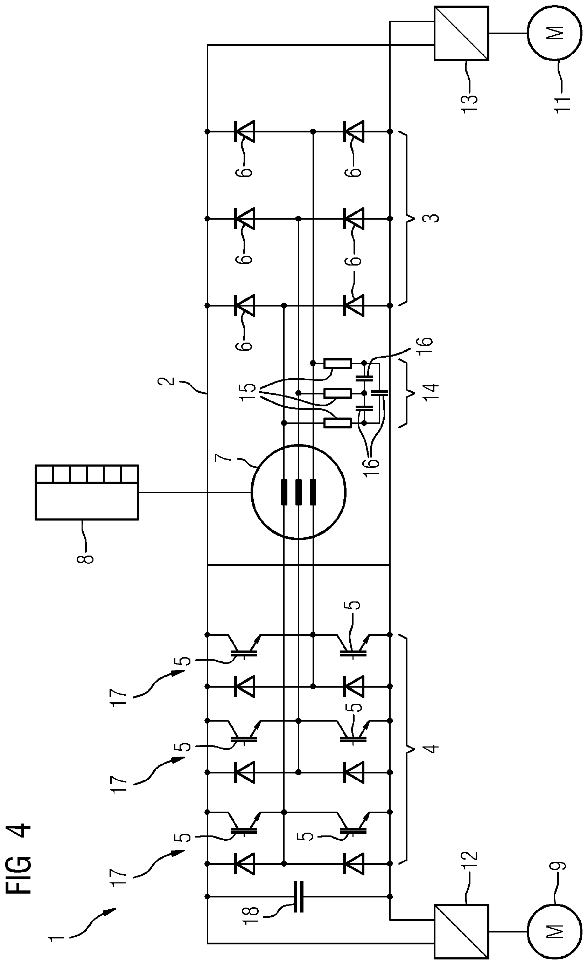

Die Darstellung nach Figur 4 zeigt ein elektrisches Energieversorgungssystem 1 mit zwei Gleichrichtern, einem ersten Gleichrichter 3 und einen zweiten Gleichrichter 4. Ein Generator 7 wird mit einem Diesel 8 (Diese-Maschine (DM)) angetrieben. Anstelle des Diesels 8 könnte auch eine Gasturbine verwendet werden, welche allerdings nicht dargestellt ist. Der Generator 7 ist beispielsweise eine Synchronmaschine oder eine Asynchronmaschine. Der Generator 7 ist in einer offenen Schaltung verschaltet. Der Generator 7 speist dreiphasig den Diodengleichrichter 3. Der Diodengleichrichter 3, welche ein ungesteuerter Gleichrichter ist, speist den Gleichspannungsbus 2. Der Diodengleichrichter 3 weist Leistungshalbleiter-Dioden 6 auf. Der Generator 7 speist darüber hinaus dreiphasig den zweiten Gleichrichter 4. Der zweite Gleichrichter 4 weist schaltbare Leistungshalbleiter 5 auf. Diese sind gemäß der IGBT-Drehstrombrücke 17 aufgeteilt. So wird in Alternative zum "klassischen IGBT Sixpack", der alleine zum Einsatz kommt und in Figur 2 dargestellt ist, die Leistung der E-Maschine, also des Generators 7, auf zwei Umrichter 3 und 4 (einen IGBT Sixpack und einen ungesteuerten Gleichrichter) aufgeteilt. Der Gleichspannungsbus 2 weist ferner eine Kapazität 18 auf. Mittels von Wechselrichtern 12 und 13 ist es möglich aus dem Gleichspannungsbus 2 elektrische Energie zu entnehmen und ein Motor 9 bzw. 11 anzutreibenden. Die Motoren 9 bis 11 stellen eine Last dar. Zumindest einer der Motoren dient insbesondere dem Antrieb eines Schiffes. Über einen Filter 14, mit Widerständen 15 und Kapazitäten kann die Qualität des Speisestroms des ersten Gleichrichters 3 verbessert werden. Der Filter 14 ist elektrisch zwischen dem ersten Gleichrichter 3 und dem Generator 7. Dieser AC-Filter ist optional und kann auch zur zusätzlichen Arbeitspunktbeeinflussung herangezogen werden. Im Gleichspannungsbus 2 ergibt sich eine DC Lastverteilung mit den angeschlossenen Umrichtern für z.B. Antrieb und Bordnetz. Im Vergleich zum alleinigen Einsatz eines Diodengleichrichter ergeben sich beim Einsatz von zwei Gleichrichtern der beschriebenen Art eine optimale Ausnutzung der E-Maschine und auch Standardisierungsmöglichkeiten. Dies gilt für Asynchronmaschinen und Synchronmaschinen (auch PEM). Im Vergleich zum alleinigen Einsatz eines aktiven Gleichrichters kann sich beim Einsatz von zwei Gleichrichtern der beschriebenen Art folgendes ergeben: nur halber IGBT-Halbleiterbedarf bzw. dadurch nur ca. 60% der Gleichrichterkosten.

## Patentansprüche

1. Elektrisches Energieversorgungssystem (1,10), insbesondere für ein Inselnetz, welches einen Gleichspannungsbus (2,20) aufweist, wobei ein erster Gleichrichter (3) und ein zweiter Gleichrichter (4) zur Speisung des Gleichspannungsbusses (2, 20) vorgesehen sind, wobei der erste Gleichrichter (3) ein Diodengleichrichter ist und der zweite Gleichrichter (4) schaltbare Leistungshalbleiter (5) aufweist, wobei der erste Gleichrichter (3) und der zweite Gleichrichter (4) mittels eines Generators (7) speisbar sind.

2. Elektrisches Energieversorgungssystem (1, 10) nach Anspruch 1, wobei der Generator (7) mittels einer Gasturbine oder mittels eines Diesels (8) antreibbar ist.

3. Elektrisches Energieversorgungssystem (1, 10) nach Anspruch 1 oder 2, wobei der Generator (7) eine Asynchronmaschine oder eine Synchronmaschine ist, wobei der Generator (7) eine offene Schaltung aufweist.

4. Elektrisches Energieversorgungssystem (1,10) nach einem der Ansprüche 1 bis 3, wobei der Gleichspannungsbus (2,20) ein Gleichspannungsbus (2,20) eines Schiffes ist, wobei über den Gleichspannungsbus (2,20) ein Motor (9, 11) zum Antrieb eines Schiffes speisbar ist.

5. Elektrisches Energieversorgungssystem (1,10) nach einem der Ansprüche 1 bis 4, wobei die elektrische Verbindung des Generators (7) mit dem ersten Gleichrichter (3) und/oder mit dem zweiten Gleichrichter (4) einen Filter (14) aufweist.

6. Elektrisches Energieversorgungssystem (1) der erste Gleichrichter (3) zumindest 1/3 der Leistung des zweiten Gleichrichters (4) aufweist und der zweite Gleichrichter (4) zumindest 1/3 der Leistung des ersten Gleichrichters (3) aufweist.

7. Elektrisches Energieversorgungssystem (1,10) nach einem der Ansprüche 1 bis 6, wobei der zweite Gleichrichter (4) eine IGBT-Drehstrombrücke (17) aufweist.

8. Elektrisches Energieversorgungssystem (1,10) nach einem der Ansprüche 1 bis 7, wobei der Gleichspannungsbus (2,20) eine Kapazität (18) aufweist.

9. Verfahren zum Betrieb eines elektrischen Energieversorgungssystems (1,10), welches einen Gleichspannungsbus (2,20) aufweist, wobei ein erster Gleichrichter (3) und ein zweiter Gleichrichter (4) zur Speisung des Gleichspannungsbusses (2, 20) vorgesehen sind, wobei der erste Gleichrichter (3) ein Diodengleichrichter ist und der zweite Gleichrichter (4) schaltbare Leistungshalbleiter (5) aufweist, wobei die Gleichrichter (3,4) zur Speisung des Gleichspannungsbusses abhängig von einer Last (9,11) zu unterschiedlichen Zeitpunkten zugeschalten werden.

10. Verfahren nach Anspruch 9, wobei ein elektrisches Energieversorgungssystem (1, 10) nach einem der Ansprüche 1 bis 8 verwendet wird.
